# FASCICULE DE BREVET EUROPEEN

(11) **EP 4 086 372 B1**
(45) Date de publication et mention de la délivrance du brevet: **13.03.2024**
(21) Numéro de dépôt: 22170338.2
(22) Date de dépôt: 27.04.2022
(51) Int. Cl.: C25B 1/042, C25B 9/00, C25B 15/08

(54) **SYSTÈME D ÉLECTROLYSEUR HAUTE TEMPÉRATURE À COMPRESSION OPTIMISÉE**
HOCHTEMPERATUR-ELEKTROLYSE-SYSTEM MIT OPTIMIERTER KOMPRESSION
HIGH-TEMPERATURE ELECTROLYSER SYSTEM WITH OPTIMISED COMPRESSION

(30) Priorité: 04.05.2021 FR 2104678
(43) Date de publication de la demande: 09.11.2022
(73) Titulaire: Commissariat à l'énergie atomique et aux énergies alternatives, 75015 Paris (FR)
(72) Inventeur: TAUVERON, Nicolas, 38054 GRENOBLE Cedex 09 (FR); DUMOULIN, Pierre, 38054 GRENOBLE Cedex 09 (FR)
(74) Mandataire: Hautier IP

(56) Documents cités:
- EP-A1- 3 015 570
- WO-A1-2016/161999
- CN-A- 110 904 464
- DE-A1-102010 020 265
- FR-A1- 3 056 337
- KR-A- 20200 108 151

## Description

### DOMAINE TECHNIQUE

La présente invention concerne le domaine de l'électrolyse de l'eau à haute température (EHT, ou EVHT pour électrolyse de la vapeur d'eau à haute température, ou HTE acronyme anglais pour High Température Electrolysis, ou encore HTSE acronyme anglais pour High Température Steam Electrolysis), également à oxyde solide (SOEC, acronyme anglais pour « Solid Oxide Electrolyte Cell ») et celui des piles à combustible à oxydes solides (SOFC, acronyme anglais pour « Solid Oxide Fuel Cell »). Elle trouve pour application particulièrement pour optimiser la consommation énergétique d'un système électrolyseur SOEC.

### ETAT DE LA TECHNIQUE

L'électrolyse de l'eau est une réaction électrolytique qui décompose l'eau en dioxygène et dihydrogène gazeux avec l'aide d'un courant électrique selon la réaction : H2O ---+ H2 + 1/2 02.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Une cellule d'électrolyse à oxydes solides ou « SOEC » (acronyme anglo-saxon « Solid Oxide Electrolyte Cell ») comprend notamment : - une première électrode conductrice poreuse, ou « cathode », destinée à être alimentée en vapeur d'eau pour la production de dihydrogène, - une seconde électrode conductrice poreuse, ou « anode », par laquelle s'échappe le dioxygène produit par l'électrolyse de l'eau injectée sur la cathode, et - une membrane à oxyde solide (électrolyte dense) prise en sandwich entre la cathode et l'anode, la membrane étant conductrice anionique pour de hautes températures, usuellement des températures supérieures à 600°C. En chauffant la cellule au moins à cette température et en injectant un courant électrique I entre la cathode et l'anode, il se produit alors une réduction de l'eau sur la cathode, ce qui génère du dihydrogène (H2) au niveau de la cathode et du dioxygène au niveau de l'anode.

Pour réaliser l'électrolyse de la vapeur d'eau à haute température EHT, on injecte de la vapeur d'eau H2O dans le compartiment cathodique.

Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène migrent à travers l'électrolyte et se recombinent en dioxygène O2 à l'interface entre l'électrolyte et l'électrode à oxygène (anode).

Pour la mise en oeuvre effective de l'électrolyse par l'empilement, l'empilement est porté à une température supérieure à 600°C, usuellement une température comprise entre 600°C et 950°C, l'alimentation en gaz est mise en marche à débit constant et une source d'alimentation élec-trique est branchée entre deux bornes de l'empilement afin d'y faire cir-culer le courant I.

Le rendement de la transformation électricité en hydrogène est un point clé afin d'assurer la compétitivité de la technologie. La consommation électrique a principalement lieu lors de la réaction d'électrolyse à proprement parler, mais près de 30 % de la consommation de l'électrolyseur provient du système de gestion thermique/hydraulique des fluides. C'est-à-dire l'architecture externe à l'électrolyseur et la gestion des fluides et de l'énergie thermique dans cette architecture.

Une partie significative de la consommation du système provient du système de gestion thermique hydraulique des fluides en particulier de la compression de l'hydrogène. En effet, la SOEC produit de l'hydrogène à basse pression, ou plus exactement un mélange d'eau et de dihydrogène, mélange qu'il faut séparer et comprimer jusqu'à une pression d'usage. L'optimisation du rendement électrique du système passe donc en particulier par une optimisation de cette chaîne de compression.

CN110904464 décrit un système comprenant un électrolyseur (SOEC) à haute température.

Il existe donc un besoin de minimiser cette consommation en optimisant l'architecture et la gestion des fluides du système de l'électrolyseur.

Un objet de la présente invention est donc de proposer un système d'électrolyseur haute température à compression optimisée.

Les autres objets, caractéristiques et avantages de la présente inven-tion apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un système comprenant
- un électrolyseur à haute température (EHT),
- une première ligne d'alimentation de l'électrolyseur configurée pour alimenter l'électrolyseur en vapeur d'eau,
- une première ligne d'évacuation de l'électrolyseur configurée pour évacuer depuis l'électrolyseur du dihydrogène,
- une deuxième ligne d'évacuation de l'électrolyseur configurée pour évacuer depuis l'électrolyseur du dioxygène,
- un premier module d'échange thermique configuré pour assurer un échange thermique entre la première ligne d'alimentation en vapeur d'eau et la première ligne d'évacuation du dihydrogène,
caractérisé en ce que le système comprend un éjecteur de vapeur agencé en aval du premier module d'échange thermique sur la première ligne d'évacuation du dihydrogène et configuré pour injecter de la vapeur d'eau dans la première ligne d'évacuation du dihydrogène.

L'éjecteur participe à la compression du dihydrogène produit et donc permet de diminuer l'importance des compresseurs pour atteindre la pression de stockage du dihydrogène. Les compresseurs sont des organes encombrants et très consommateurs d'énergie électrique. La compression en particulier le début de la compression pour doubler la pression atmosphérique est très énergivore. La présence de l'éjecteur permet donc une réduction de la consommation d'électricité.

La présente invention permet d'utiliser la vapeur disponible pour réaliser en partie la compression de l'hydrogène en utilisant un procédé de thermo compression : un éjecteur.

L'utilisation d'un éjecteur permet de réduire les besoins de compression par des compresseurs et donc de diminuer la consommation électrique générale du système. L'utilisation de vapeur disponible pour son injection par un éjecteur en mélangeant celle-ci à l'hydrogène produit par la SOEC est possible, car le flux d'hydrogène produit contient déjà une partie de vapeur d'eau. L'injection de vapeur supplémentaire est donc possible.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par le dessin d'accompagnement suivant:

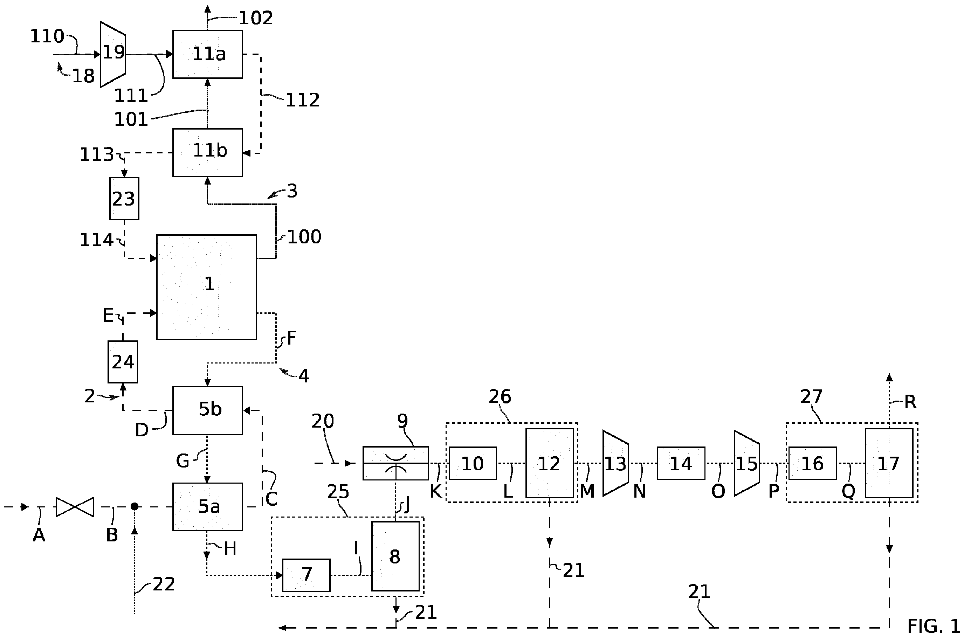

La figure 1 est un schéma fonctionnel représentant le système selon l'invention

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le système comprend au moins un compresseur 13, 15 agencé en aval de l'éjecteur 9. Le compresseur permet de poursuivre la compression du dihydrogène vers une pression cible.

Selon un exemple, le système comprend au moins deux compresseurs 13, 15 agencés en série et un échangeur thermique 14 agencé entre deux compresseurs 13, 15. Les compresseurs en série espacés par l'échangeur thermique permettent une montée en pression du dihydrogène tout en assurant entre les compressions un abaissement de la température en vue d'une nouvelle compression. Selon une possibilité, un séparateur est également agencé entre les deux compresseurs, préférentiellement après l'échangeur thermique si de l'eau liquide se condense lors de la phase de refroidissement du mélange.

Selon un exemple, le système comprend au moins deux éjecteurs 9 agencés en série.

De préférence, le système comprend un étage de traitement est agencé entre deux éjecteurs. L'étage de traitement permet de réduire la quantité d'eau dans le mélange et donc de réduire le débit du flux pour permettre une novelle compression. Un étage de traitement comprend un échangeur thermique et/ou un séparateur liquide/gaz.

Selon un exemple, le système comprend un premier étage de traitement 26 du dihydrogène agencé sur la première ligne d'évacuation 4 du dihydrogène en aval de l'éjecteur 9.

Selon un exemple, le compresseur 13 est agencé en aval du premier étage de traitement 26. Cette position du compresseur permet de le faire fonctionner sur un débit plus faible du fait de l'assèchement et du refroidissement du flux par l'étage de traitement.

Selon un exemple, le premier étage de traitement comprend un échangeur thermique 10 et/ou un séparateur 12 liquide/gaz.

Selon un exemple, le système comprend un étage de traitement préliminaire du dihydrogène agencé sur la première ligne d'évacuation 4 du dihydrogène en amont de l'éjecteur 9.

Selon un exemple, le système comprend un deuxième étage de traitement 27 du dihydrogène agencé sur la première ligne d'évacuation 4 du dihydrogène en aval du compresseur 13, 15.

De préférence, le système comprend un troisième étage de traitement du dihydrogène agencé sur la première ligne d'évacuation 4 du dihydrogène en aval du deuxième étage de traitement 27.

Selon un exemple, le système comprend une deuxième ligne d'alimentation 10 de l'électrolyseur configuré pour alimenter l'électrolyseur 1 en air
Selon un exemple, le système comprend un deuxième module d'échange thermique 11 configuré pour assurer un échange thermique entre la deuxième ligne d'alimentation 10 en air et la deuxième ligne d'évacuation 3 du dioxygène.

Selon un exemple, le système comprend une ligne de recyclage d'eau 21 connectée fluidiquement à au moins un parmi l'étage de traitement préliminaire, le premier étage de traitement et le deuxième étage de traitement.

Selon un exemple, la vapeur d'eau est de la vapeur d'eau fatale. La vapeur d'eau est à une température de 150°C.

Selon un aspect l'invention concerne un procédé de traitement du dihydrogène produite par un électrolyseur 1 à haute température tel que décrit ci-dessus comprenant une étape d'injection de vapeur d'eau par un éjecteur 9 dans la première ligne d'évacuation du dihydrogène, préférentiellement en aval d'un premier module d'échange thermique 5. L'amont et l'aval, l'entrée, la sortie, en un point donné sont pris en référence au sens de circulation du fluide.

On entend par un paramètre «sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Le système selon l'invention comprend un électrolyseur 1 à haute température (EHT). Préférentiellement, l'électrolyseur 1 est de type SOEC de l'acronyme anglais pour « Solid Oxide Electrolyte Cell », c'est-à-dire à oxyde solide.

Le système comprend plusieurs lignes d'alimentation et d'évacuation connectées à l'électrolyseur 1. Ainsi, on entend par ligne une canalisation, un tube ou un ensemble de canalisations ou tubes qui permettent le transport de fluide vers et depuis l'électrolyseur 1.

Le système selon l'invention comprend une première ligne d'alimentation 2 de l'électrolyseur 1 apte à alimenter l'électrolyseur 1 en vapeur d'eau. Selon une possibilité, la première ligne d'alimentation 2 est configurée pour apporter à l'électrolyseur 1 de la vapeur d'eau, on entend par là que la première ligne d'alimentation 2 peut apporter un mélange de vapeur d'eau et d'autre(s) gaz par exemple de l'air ou du dihydrogène ou de dioxyde de carbone. Selon une possibilité préférée, la vapeur d'eau circulant dans la première ligne d'alimentation 2 est au moins partiellement de la vapeur fatale, par exemple à une température de 150°C. La vapeur fatale est issue par exemple de procédés industriels. L'avantage de cette solution est de valoriser de l'énergie fatale, réduisant le cout énergétique du système d'électrolyse. Selon une autre possibilité, en amont dans cette première ligne d'alimentation 2, la vapeur d'eau n'est pas encore formée et la première ligne d'alimentation 2 est configurée pour recevoir de l'eau liquide. Selon cette possibilité, la première ligne d'alimentation 2 comprend une première portion recevant de l'eau liquide et une deuxième portion recevant de la vapeur d'eau. Préférentiellement, la première portion est située en amont d'un générateur de vapeur et la deuxième portion est située en aval dudit générateur de vapeur.

Selon cette possibilité, le système selon l'invention comprend un générateur de vapeur. Le générateur de vapeur est destiné à produire de la vapeur d'eau à partir d'eau liquide. Le générateur de vapeur est alimenté en énergie pour assurer l'augmentation de la température de l'eau liquide au-dessus de sa température d'évaporation. Le générateur de vapeur est agencé sur la première ligne d'alimentation en vapeur d'eau.

Le système selon l'invention comprend une première ligne d'évacuation 4 apte à évacuer depuis l'électrolyseur 1 du dihydrogène (H₂). Préférentiellement, la première ligne d'évacuation 4 reçoit le dihydrogène. Le dihydrogène est avantageusement produit par l'électrolyseur 1. Le dihydrogène est sous forme gazeuse. La première ligne d'évacuation 4 peut évacuer un mélange de dihydrogène et de vapeur d'eau, dite résiduelle n'ayant pas était décomposé par l'électrolyseur 1.

Le système selon l'invention comprend une deuxième ligne d'évacuation 3 apte à évacuer depuis l'électrolyseur 1 du dioxygène (O₂). Préférentiellement, la deuxième ligne d'évacuation 3 reçoit le dioxygène. Le dioxygène est avantageusement produit par l'électrolyseur 1. Le dioxygène est sous forme gazeuse. La deuxième ligne d'évacuation 3 évacue selon une possibilité un gaz enrichi en dioxygène, par exemple de l'air enrichi en dioxygène.

Dans la suite de la description, la première ligne d'alimentation 2 est dénommée première ligne d'alimentation 2 en vapeur d'eau, la première ligne d'évacuation 4 est dénommée première ligne d'évacuation 4 en dihydrogène et la deuxième ligne d'évacuation 3 est dénommée deuxième ligne d'évacuation 3 en dioxygène sans être limitative sur le gaz, le fluide ou le mélange pouvant être transporté dans ces lignes.

Selon une possibilité, le système comprend un premier module d'échange thermique 5 configuré pour assurer un échange thermique entre la première ligne d'alimentation 2 en vapeur d'eau et la première ligne d'évacuation 4 du dihydrogène. Ce module d'échange thermique est configuré pour transférer les calories du dihydrogène issu de l'électrolyseur 1 à la vapeur d'eau destinée à alimenter l'électrolyseur 1. Un flux de gaz de dihydrogène assure l'augmentation de température du flux de vapeur d'eau tout en permettant également de refroidir le flux de dihydrogène évacué et qui est avantageusement asséché et/ou comprimé en vue de son utilisation.

Le premier module d'échange thermique 5 comprend selon un mode de réalisation au moins un échangeur thermique 5a configuré pour assurer le transfert thermique du dihydrogène vers la vapeur d'eau. Selon un mode de réalisation préféré, le premier module d'échange thermique 5 comprend deux échangeurs thermiques 5a, 5 b agencés en série entre la première ligne d'alimentation 2 et la première ligne d'évacuation 4. Cette disposition permet de prévoir un deuxième échangeur thermique 5 b adapté à la température du dihydrogène en sortie de l'électrolyseur 1, classiquement de l'ordre de 700°C, et un premier échangeur thermique 5a plus habituel adapté à la température du dihydrogène après le passage dans un échangeur thermique De cette manière, les composants sont optimisés pour les températures et transferts thermiques à réaliser.

Selon un mode de réalisation, le système comprend une deuxième ligne d'alimentation 18 apte à alimenter l'électrolyseur 1 en air. Préférentiellement, la deuxième ligne d'alimentation 18 reçoit de l'air. Selon une possibilité, la deuxième ligne d'alimentation 18 est configurée pour apporter à l'électrolyseur 1 de l'air, on entend par là que la deuxième ligne d'alimentation 18 peut apporter de l'air, l'air étant par exemple un mélange gazeux qui permet de balayer la cellule de l'électrolyseur1 et d'emporter le dioxygène produit par l'électrolyseur 1.

Selon ce mode de réalisation, il est avantageux que le système selon l'invention comprenne un deuxième module d'échange thermique 11 configuré pour assurer un échange thermique entre la deuxième ligne d'alimentation 18 en air et la deuxième ligne d'évacuation 3 du dioxygène. Ce module d'échange thermique 11 est configuré pour transférer les calories du dioxygène issu de l'électrolyseur 1 à l'air destiné à alimenter l'électrolyseur 1. Un flux de gaz de dioxygène assure l'augmentation de la température du flux d'air ce qui permet également de refroidir le flux de dioxygène évacué.

Le deuxième module d'échange thermique 11 comprend selon un mode de réalisation au moins un échangeur thermique 11a configuré pour assurer le transfert thermique du dioxygène vers l'air. Selon un mode de réalisation préféré, le deuxième module d'échange thermique 11 comprend deux échangeurs thermiques 11a, 11b agencés en série entre la deuxième ligne d'alimentation 18 et la deuxième ligne d'évacuation 3. Cette disposition permet de prévoir un deuxième échangeur thermique 11b adapté à la température du dioxygène en sortie de l'électrolyseur 1, classiquement de l'ordre de 700°C, et un premier échangeur thermique 11a plus habituel adapté à la température du dioxygène après le passage dans un échangeur thermique De cette manière, les composants sont optimisés pour les températures et transferts thermiques à réaliser.

Le système comprend préférentiellement un compresseur 19 agencé sur la deuxième ligne d'alimentation 18 destinée à l'alimentation en air. Le compresseur 19 est préférentiellement agencé en amont du deuxième module d'échange thermique 11, s'il est présent. Le compresseur 19 est destiné à assurer la compression de l'air destiné à être fourni à l'électrolyseur 1. La compression de l'air contribue avantageusement à augmenter la température de l'air avant son entrée dans l'électrolyseur 1.

Selon une possibilité, le système comprend au moins une source de chaleur complémentaire configurée pour chauffer la vapeur d'eau entrant dans l'électrolyseur 1 jusqu'à une température cible prédéfinie. La source de chaleur complémentaire est avantageusement agencée sur la première ligne d'alimentation 2 en vapeur d'eau, préférentiellement en aval du premier module d'échange thermique 5. La source de chaleur complémentaire est par exemple un réchauffeur électrique 24.

Selon une possibilité, le système comprend au moins une source de chaleur complémentaire configurée pour chauffer l'air entrant dans l'électrolyseur 1 jusqu'à une température cible prédéfinie. La source de chaleur complémentaire est avantageusement agencée sur la deuxième ligne d'alimentation 18 en air, préférentiellement en aval du deuxième module d'échange thermique 11. La source de chaleur complémentaire est par exemple un réchauffeur électrique 23.

Avantageusement, le dihydrogène évacué de l'électrolyseur 1 est à pression quasi atmosphérique. Or, le stockage du dihydrogène est préférentiellement réalisé de manière comprimée par exemple à une pression de l'ordre de 30 bars, soit 3 MPa.

Le système selon l'invention comprend avantageusement différents moyens, telle une chaine de compression, agencés sur la ligne d'évacuation du dihydrogène 4 pour comprimer le dihydrogène et atteindre une pression conforme pour son stockage.

Selon un aspect, l'invention comprend un éjecteur 9 agencé sur la première ligne d'évacuation 4 du dihydrogène.

Un éjecteur 9 est configuré pour introduire un fluide à haute pression dans un fluide plus basse pression pour que le fluide à plus haute pression entraîne le fluide à plus basse pression. L'éjecteur 9 est également dénommé injecteur ou jet pump en anglais. L'éjecteur 9 est avantageux, car il est peu encombrant et nécessite peu de maintenance en ce qu'il ne comprend pas de pièce mobile.

L'éjecteur 9 est alimenté par une source de vapeur, préférentiellement une source de vapeur d'eau, de préférence une vapeur d'eau fatale. La vapeur d'eau est avantageusement basse température de l'ordre par exemple de 150°C. La source de vapeur alimentant l'éjecteur 9 est avantageusement la même que celle alimentant la première ligne d'alimentation 2 en vapeur. L'éjecteur 9 exploite l'effet Venturi et permet à l'aide de la vapeur source de comprimer le dihydrogène évacué dans la première ligne d'évacuation 4 de dihydrogène.

Selon un mode de réalisation, le système comprend au moins un éjecteur 9, plus précisément au moins deux éjecteurs. Dans ce cas-là, les éjecteurs 9 sont agencés en série. Préférentiellement, les éjecteurs sont séparés par au moins un échangeur thermique et/ou un séparateur liquide/gaz. La présence d'un échangeur de chaleur et/ou un séparateur liquide/gaz entre les éjecteurs permet de réduire la température du fluide circulant, avantageusement du dihydrogène mélanger à de l'eau, et/ou retirer l'eau du dihydrogène. Cet agencement permet également de faire un saut de pression contrôlé.

L'éjecteur 9 est configuré pour réaliser une montée en pression du flux d'hydrogène, préférentiellement la première montée en pression du flux de dihydrogène produit.

Selon un mode de réalisation, le système peut comprendre un module de stockage de la vapeur en amont de l'éjecteur 9 et/ou en amont de la première ligne d'alimentation 2 de vapeur d'eau de sorte à lisser la source thermique alimentant l'éjecteur 9 et/ou la première ligne d'alimentation 2.

Selon une possibilité, le système comprend au moins un compresseur 13,15 agencé sur la première ligne d'évacuation 4 du dihydrogène, préférentiellement en aval de l'éjecteur 9. Le système peut comprendre au moins deux compresseurs 13, 15 agencés sur la première ligne d'évacuation 4 de dihydrogène. Préférentiellement, les compresseurs 13, 15 sont agencés en série, plus préférentiellement le système comprend un échangeur thermique 14 tel qu'un aéroréfrigérant agencé entre deux compresseurs 13, 15. La présence d'un échangeur thermique type aéroréfrigérant par exemple entre les compresseurs 13, 15 permet d'assurer une diminution de la température du fluide circulant d'un compresseur 13 à l'autre compresseur 15, et donc une diminution de la pression et de son débit facilitant le travail du compresseur 15 suivant.

À titre d'exemple, l'éjecteur 9 assure la compression du fluide de 0,9 bar à 1,6 bars soit de 0,09 MPa à 0,16 MPa. Au moins un compresseur 13, 15 assure alors la compression du fluide entre 1,6 bar à 10 bars au lieu de 0,9 bars à 10 bars. Dans le cas où la pression du dihydrogène doit encore être augmentée, le système comprend d'autres étapes de compression et de traitement classiques pour atteindre la pression cible.

Selon un mode de réalisation, le système comprend des moyens de traitement du flux de dihydrogène produit. Le dihydrogène produit par l'électrolyseur 1 et qui ressort de celui-ci par la première ligne d'évacuation 4 présente tout d'abord une température très élevée correspondant à la température de réaction de l'électrolyseur 1. Or, en vue de son utilisation, le dihydrogène doit préférentiellement être ramené à une température proche de la température ambiante. Par ailleurs, le dihydrogène évacué de l'électrolyseur 1 par la première ligne d'évacuation 4 peut comprendre de la vapeur d'eau emportée avec le flux de dihydrogène. Il est donc également préféré de séparer le dihydrogène de l'éventuelle vapeur d'eau emportée avec, en l'asséchant.

Le système selon l'invention comprend avantageusement à cet effet au moins un étage de traitement préliminaire 25 destiné à l'assèchement et/ou la compression du dihydrogène produit.

Selon une possibilité, l'étage de traitement préliminaire 25 comprend un échangeur thermique7 tel qu'un aéroréfrigérant ou un condenseur ou un refroidisseur. L'échangeur thermique 7 est agencé sur la première ligne d'évacuation 4, préférentiellement en aval du premier module d'échange thermique 5.

L'aéroréfrigérant est un échangeur thermique entre un fluide et un gaz, le gaz étant mis en mouvement par un ventilateur. Selon une autre possibilité, l'aéroréfrigérant est remplacé par un refroidisseur standard ou un condenseur, c'est-à-dire sans ventilateur, cette solution étant toutefois moins efficace. Pour la suite de la description, il est utilisé le terme aéroréfrigérant sans pour autant être limitatif l'aéroréfrigérant pouvant être remplacé par un refroidisseur standard, ou un condenseur sans difficulté.

L'étage de traitement préliminaire 25 comprend avantageusement un séparateur 8 de liquide/gaz agencé en aval de l'aéroréfrigérant 7. Le séparateur 8 permet de séparer l'eau liquide du dihydrogène gazeux, l'eau liquide résultant du refroidissement de la vapeur d'eau dans l'aéroréfrigérant 7 en dessous de son point de condensation. Le séparateur 8 contribue donc à réduire le débit du flux circulant et donc l'énergie nécessaire à la compression.

Selon une possibilité préférée, le système comprend un premier étage de traitement 26 agencé en aval de l'étage de traitement préliminaire 25 sur la première ligne d'évacuation 4. Le premier étage de traitement 26 participe à l'assèchement du dihydrogène. Le premier étage de traitement 26 comprend avantageusement un échangeur thermique, préférentiellement un aéroréfrigérant 10. Le premier étage de traitement 26 comprend un séparateur 12 de liquide/gaz. Préférentiellement, le système comprend entre l'étage de traitement préliminaire 25 et le premier étage de traitement 26, l'éjecteur 9. Ainsi, après l'éjecteur 9, le premier étage de traitement 26 permet de réduire la quantité d'eau injectée dans le flux de dihydrogène, tandis que l'étage de traitement préliminaire 25 est configuré pour abaisser la température du flux circulant de dihydrogène produit et d'enrichir le flux circulant en dihydrogène avant de réinjecter de la vapeur d'eau par l'éjecteur 9.

Le premier étage de traitement 26 est avantageusement réalisé à une pression de 1,6 bars, pression à la sortie de l'éjecteur 9. Le premier étage de traitement 26 permet ainsi d'avoir une phase gazeuse enrichie en hydrogène et donc de diminuer le débit comprimé.

Préférentiellement, le premier étage de traitement 27 est agencé en amont de l'au moins un compresseur 13,15.

Avantageusement, au moins un compresseur 13 agencé en aval du premier étage de traitement26 peut présenter une puissance électrique réduite ce qui est un avantage du point de vue du coût et de l'utilisation de l'électricité.

À l'issue de l'étage de traitement préliminaire 25 et/ou du premier étage de traitement 26, si présent, l'eau liquide est préférentiellement recyclée par exemple en étant renvoyée vers la première ligne d'alimentation 2 en vapeur d'eau par une ligne de recyclage d'eau 21. La ligne de recyclage d'eau peut être connectée fluidiquement à la première ligne d'alimentation 2, préférentiellement dans le cas où un apport de vapeur produite par un générateur de vapeur est souhaité. Dans ce cas, la ligne de recyclage 21 est connectée à la ligne d'alimentation 2 en vapeur en amont du générateur de vapeur.

Selon une possibilité préférée, le système comprend un deuxième étage de traitement 27 agencé en aval du premier étage de traitement sur la première ligne d'évacuation 4. Le deuxième étage de traitement 27 permet de compléter l'assèchement du dihydrogène. Le deuxième étage de traitement 27 comprend avantageusement, de préférence un aéroréfrigérant 16 ou bien qui comme pour les autres étages peut être un refroidisseur standard. Le deuxième étage de traitement 27 comprend préférentiellement un séparateur 17 de liquide/gaz.

Préférentiellement, le deuxième étage de traitement 27 est agencé en aval de l'au moins un compresseur 13, 15.

L'invention s'applique avantageusement lorsque de la vapeur à basse température est disponible. On entend par vapeur basse température une vapeur ayant une température de l'ordre de 150°C.

À titre d'exemple, l'invention est avantageuse dans les cas où une vapeur à basse température est abondante et peu chère telle qu'une vapeur basse température non valorisée issue d'un procédé industriel ou d'un incinérateur de déchets, ou éventuellement un réseau de chaleur, ou encore une vapeur basse température issue de sources géothermiques ou d'une source solaire thermique. Il faut souligner l'intérêt dans le cas du solaire avec une partie photovoltaïque pour fournir l'électricité associée à une source de chaleur (solaire thermique). De plus, l'invention est particulièrement avantageuse en que cette gamme de température est assez répandue et trouve difficilement une voie de valorisation.

L'électrolyseur 1 reçoit de la vapeur d'eau et avantageusement de l'air et rejette du dihydrogène et du dioxygène.

Préférentiellement, l'électrolyseur 1 est connecté fluidiquement à la première ligne d'alimentation 2 en vapeur d'eau. La première ligne d'alimentation 2 en vapeur assure la connexion fluidique de composants agencés en amont de l'électrolyseur 1 sur ladite première ligne d'alimentation 2. La description qui suit est faite en débutant en amont de l'électrolyseur 1 et en suivant le sens de circulation dans la première ligne d'alimentation 2. Préférentiellement, la première ligne d'alimentation 2 assure la connexion fluidique à un détendeur 6. Puis la première ligne d'alimentation 2 assure la connexion fluidique de la vapeur au premier module d'échange thermique 5, préférentiellement au premier échangeur thermique 5a, puis la connexion fluidique du premier échangeur thermique 5a au deuxième échangeur thermique 5b, puis la connexion fluidique du deuxième échangeur thermique 5 b au réchauffeur électrique 24, puis la connexion fluidique du réchauffeur électrique 24 à l'électrolyseur 1.

Préférentiellement, l'électrolyseur 1 est connecté fluidiquement à une première ligne d'évacuation 4 de dihydrogène. La première ligne d'évacuation 4 assure la connexion fluidique de composants agencés en aval de l'électrolyseur 1 sur ladite première ligne d'évacuation 4. La description qui suit est faite en débutant de l'électrolyseur 1 et en suivant le sens de circulation dans la première ligne d'évacuation 4 depuis l'électrolyseur 1. La première ligne d'évacuation 4 assure la connexion fluidique de l'électrolyseur 1 avec le premier module d'échange thermique 5, plus préférentiellement avec le deuxième échangeur thermique 5 b, puis la connexion fluidique du deuxième échangeur thermique 5 b au premier échangeur thermique 5a, puis la connexion fluidique du premier échangeur thermique 5a à l'étage de traitement préliminaire 25 plus précisément à l'échangeur thermique 7, préférentiellement aéroréfrigérant, puis la connexion fluidique de l'aéroréfrigérant 7 au séparateur liquide/gaz 8. Puis la première ligne d'évacuation 4 assure la connexion fluidique du séparateur liquide/gaz 8 à l'éjecteur 9, puis la connexion fluidique de l'éjecteur 9 au premier étage de traitement 26, plus précisément à l'échangeur thermique 10 préférentiellement l'aéroréfrigérant 10, puis la connexion fluidique de l'aéroréfrigérant 10 au séparateur liquide/gaz 12, puis la connexion fluidique du séparateur liquide/gaz 12 au le compresseur 13, puis la connexion fluidique du compresseur 13 à l'aéroréfrigérant 14, puis la connexion fluidique de l'aéroréfrigérant 14 au compresseur 15, puis la connexion fluidique du compresseur 15 au deuxième étage de traitement, plus précisément à l'échangeur thermique 16, de préférence aéroréfrigérant 16, puis la connexion fluidique de l'aéroréfrigérant 16 au séparateur liquide/gaz 27.

Préférentiellement, l'électrolyseur 1 est connecté fluidiquement à une de deuxième ligne d'évacuation 3 de dioxygène. La deuxième ligne d'évacuation 3 assure la connexion fluidique de composants agencés en aval de l'électrolyseur 1 sur ladite deuxième ligne d'évacuation 3. La description qui suit est faite en débutant de l'électrolyseur 1 et en suivant le sens de circulation dans la deuxième ligne d'évacuation 3 depuis l'électrolyseur 1. La deuxième ligne d'évacuation 3 assure la connexion fluidique de l'électrolyseur 1 avec le deuxième module d'échange thermique 11, plus préférentiellement avec le deuxième échangeur thermique 11b, puis la connexion fluidique du deuxième échangeur thermique 11b au premier échangeur thermique 11a.

Préférentiellement, l'électrolyseur 1 est connecté fluidiquement à la deuxième ligne d'alimentation 18 en air. La deuxième ligne d'alimentation 18 assure la connexion fluidique de composants agencés en amont de l'électrolyseur 1 sur ladite deuxième ligne d'alimentation 18. La deuxième ligne d'alimentation assure la connexion fluidique du compresseur 19 au premier échangeur thermique 11a, puis la connexion fluidique du premier échangeur thermique 11a au deuxième échangeur thermique 11b, puis la connexion fluidique du deuxième échangeur thermique 11b au réchauffeur électrique 23, puis la connexion fluidique du réchauffeur électrique 23 à l'électrolyseur 1.

Le système comprend des connexions fluidiques décrites ci-après et faisant partie des différentes lignes d'alimentation 2, 18 et d'évacuation 3, 4 du système.

Concernant la première ligne d'alimentation 2, elle comprend avantageusement une connexion fluidique A connectée à l'entrée du détendeur 6.

Avantageusement, la première ligne d'alimentation 2 comprend une connexion fluidique B connectée entre la sortie du détendeur 6 et l'entrée du premier échangeur thermique 5a du module d'échange thermique 5.

Avantageusement, la première ligne d'alimentation 2 comprend une connexion fluidique C connectée entre la sortie du premier échangeur thermique 5a et l'entrée du deuxième échangeur thermique 5 b.

Avantageusement, la première ligne d'alimentation 2 comprend une connexion fluidique D connectée entre la sortie du deuxième échangeur thermique 5 b et l'entrée du réchauffeur électrique 24.

Avantageusement, la première ligne d'alimentation 2 comprend une connexion fluidique E connectée entre la sortie du réchauffeur électrique 24 et l'entrée de l'électrolyseur 1.

Concernant la première ligne d'évacuation 4, elle comprend avantageusement une première connexion fluidique F entre la sortie de l'électrolyseur 1 et l'entrée du deuxième échangeur thermique 5 b du premier module d'échange thermique 5.

Avantageusement, la première ligne d'évacuation 4 comprend une connexion fluidique G entre la sortie du deuxième échangeur thermique 5 b du premier module d'échange thermique 5 et l'entrée du premier échangeur thermique 5a du premier module d'échange thermique 5.

Avantageusement, la première ligne d'évacuation 4 comprend une connexion fluidique H entre la sortie du premier échangeur thermique 5a et l'entrée de l'aéroréfrigérant 7.

Avantageusement, la première ligne d'évacuation 4 comprend une connexion fluidique I entre la sortie de l'aéroréfrigérant 7 et l'entrée du séparateur 8.

Avantageusement, la première ligne d'évacuation 4 comprend une connexion fluidique J entre la sortie du séparateur 8 et l'éjecteur 9.

Avantageusement, la première ligne d'évacuation 4 comprend une connexion fluidique K entre la sortie de l'éjecteur 9 et l'entrée de l'aéroréfrigérant 10.

Avantageusement, la première ligne d'évacuation 4 comprend une connexion fluidique L entre la sortie de l'aéroréfrigérant 10 et l'entrée du séparateur 12.

Avantageusement la première ligne d'évacuation 4 comprend une connexion fluidique M entre la sortie du séparateur 12 et l'entrée du compresseur 13.

Avantageusement, la première ligne d'évacuation 4 comprend une connexion fluidique N entre la sortie du compresseur 13 et l'entrée de l'aéroréfrigérant 14.

Avantageusement, la première ligne d'évacuation 4 comprend une connexion fluidique O entre la sortie de l'aéroréfrigérant 14 et l'entrée du compresseur 15.

Avantageusement, la première ligne d'évacuation 4 comprend une connexion fluidique P entre la sortie du compresseur 15 et l'entrée de l'aéroréfrigérant 16.

Avantageusement, la première ligne d'évacuation 4 comprend une connexion fluidique Q entre la sortie de l'aéroréfrigérant 16 et l'entrée du séparateur 17.

Avantageusement, la première ligne d'évacuation 4 comprend une connexion fluidique R assurant la sortie du dihydrogène depuis le séparateur 17.

Concernant la deuxième ligne d'évacuation 3 de dioxygène, elle comprend avantageusement une connexion fluidique 100 entre la sortie de l'électrolyseur 1 et l'entrée du deuxième échangeur thermique 11b du deuxième module d'échange thermique 11.

Avantageusement, la deuxième ligne d'évacuation 3 comprend une connexion fluidique 101 entre la sortie du deuxième échangeur thermique 11b et l'entrée du premier échangeur thermique 11a du deuxième module d'échange thermique 11.

Avantageusement, la deuxième ligne d'évacuation 3 comprend une connexion fluidique 102 entre la sortie du premier échangeur thermique 11a et l'extérieur.

Concernant la deuxième ligne d'alimentation 4 en air, elle comprend avantageusement une connexion fluidique 110 entrant dans compresseur 19.

Avantageusement, la deuxième ligne d'alimentation 4 comprend une connexion fluidique 111 entre la sortie du compresseur 19 et l'entrée du premier échangeur thermique 11a du deuxième module d'échange thermique 11.

Avantageusement, la deuxième ligne d'alimentation 4 comprend une connexion fluidique 112 entre la sortie du premier échangeur thermique 11a et l'entrée du deuxième échangeur thermique 11b du deuxième module d'échange thermique 11.

Avantageusement, la deuxième ligne d'alimentation 4 comprend une connexion fluidique 113 entre la sortie du deuxième échangeur thermique 11b et l'entrée du réchauffeur électrique 13.

Avantageusement, la deuxième ligne d'alimentation 4 comprend une connexion fluidique 114 entre la sortie du réchauffeur électrique 13 et l'entrée de l'électrolyseur 1.

En fonctionnement, la vapeur d'eau arrive dans la première ligne d'alimentation 2 en vapeur d'eau. La connexion fluidique A est avantageusement connectée à l'entrée du détendeur 6. La ligne de recyclage d'eau 21 peut être connectée fluidiquement à la première ligne d'alimentation 2.

La vapeur d'eau sort du détendeur 6 par la connexion fluidique B et pénètre, préférentiellement directement, dans le premier module d'échange thermique 5, préférentiellement dans le premier échangeur thermique 5a. La vapeur d'eau est chauffée dans le premier échangeur thermique 5a par récupération des calories du dihydrogène circulant dans le premier échangeur thermique 5a. La vapeur d'eau surchauffée sort du premier échangeur thermique 5a par la connexion fluidique C et pénètre, préférentiellement directement, dans le deuxième échangeur thermique 5 b. La vapeur d'eau est à nouveau chauffée dans le deuxième échangeur thermique 5 b par récupération des calories du dihydrogène circulant dans le deuxième échangeur thermique 5 b. La vapeur d'eau surchauffée sort du deuxième échangeur thermique 5 b par la connexion fluidique D et pénètre, préférentiellement directement, dans le réchauffeur électrique 24 si besoin. Le réchauffeur électrique 24 assure la dernière montée en température éventuellement nécessaire pour que la vapeur d'eau atteigne une température cible prédéfinie pour entrer dans l'électrolyseur 1. La vapeur d'eau sort du réchauffeur électrique 24 par la connexion fluidique E et pénètre, préférentiellement directement, dans l'électrolyseur 1.

L'électrolyseur 1 est alimenté en courant électrique selon une tension et une intensité prédéfinie permettant d'assurer l'électrolyse et donc la production de dihydrogène et dioxygène.

Le dihydrogène sort de l'électrolyseur 1 par la première ligne d'évacuation, par la connexion fluidique F et pénètre, préférentiellement directement, dans le premier module d'échange thermique 5, préférentiellement le deuxième échangeur thermique 5 b. Le dihydrogène sort de l'électrolyseur à l'état gazeux chaud, il est nécessaire d'abaisser sa température pour l'utiliser et/ou le stocker. Les calories du dihydrogène sont donc récupérées par la première ligne d'alimentation et plus précisément la vapeur y circulant. Dans le deuxième échangeur thermique 5 b, le dihydrogène voit sa température baissée par transfert de calories au profit de la vapeur d'eau circulant dans le deuxième échangeur thermique 5 b. Le dihydrogène refroidi sort du deuxième échangeur thermique 5 b par la connexion fluidique G et pénètre, préférentiellement directement, dans le premier échangeur thermique 5a. Dans le premier échangeur thermique 5a, le dihydrogène voit à nouveau sa température baissée par transfert de calories au profit de la vapeur d'eau circulant dans le premier échangeur thermique 5a. Le dihydrogène refroidi sort du premier échangeur thermique 5a par la connexion fluidique H et pénètre, préférentiellement directement, dans l'aéroréfrigérant 7. En passant dans l'aéroréfrigérant 7, le dihydrogène est refroidi. Le dihydrogène sort de l'aéroréfrigérant 7 par la connexion fluidique I et pénètre, préférentiellement directement, dans le séparateur 8 assurant la condensation de l'eau contenue dans le dihydrogène. Le dihydrogène sort du séparateur de liquide/gaz 8 par la connexion fluidique J et pénètre préférentiellement directement dans l'éjecteur 9 qui injecte de la vapeur d'eau dans la première ligne d'évacuation 4 du dihydrogène. Le dihydrogène mélangé à la vapeur d'eau injectée par l'éjecteur sort de l'éjecteur par la connexion fluidique K et pénètre préférentiellement directement dans l'aéroréfrigérant 10 où il subit un refroidissement assurant la condensation d'une partie de la vapeur d'eau du mélange. Le dihydrogène, préférentiellement le mélange dihydrogène gazeux, vapeur d'eau, eau liquide condensée sort de l'aéroréfrigérant par la connexion fluidique L et pénètre préférentiellement directement dans le séparateur 12 où l'eau liquide est séparée de la phase gazeuse. La phase gazeuse sort du séparateur 12 et pénètre préférentiellement directement dans le compresseur 13 par la connexion fluidique M et subit si besoin une nouvelle compression en vue d'une nouvelle condensation. Le dihydrogène sort du compresseur 13 par la connexion fluidique N et pénètre préférentiellement directement dans l'aéroréfrigérant 14. Le dihydrogène sort de l'aéroréfrigérant 14 par la connexion fluidique O et pénètre, préférentiellement directement, dans le compresseur 15 d'où il sort par la connexion fluidique P et pénètre, préférentiellement directement, dans l'aéroréfrigérant 16 ou un échangeur thermique assurant le refroidissement du dihydrogène. Le dihydrogène sort de l'aéroréfrigérant 16 ou un échangeur thermique par la connexion fluidique Q et pénètre, préférentiellement directement, dans le séparateur de liquide/gaz 20 assurant la condensation du dihydrogène. Le dihydrogène condensé sort du séparateur de liquide/gaz 17 par la connexion fluidique R et peut être utilisé ou stocké. L'eau liquide condensée récupérée du séparateur de liquide/gaz 8, 12, 17 peut être recyclée dans la première ligne d'alimentation 2 en vapeur d'eau par connexion fluidique avec la ligne de recyclage d'eau 21.

Le dioxygène produit par l'électrolyseur sort par la deuxième ligne d'évacuation 3, par la connexion fluidique 100 et pénètre, préférentiellement directement, dans le deuxième module d'échange thermique 11, préférentiellement le deuxième échangeur thermique 11b. Le dioxygène sort de l'électrolyseur à l'état gazeux chaud, il est nécessaire d'abaisser sa température pour le rejet dans l'air. Les calories du dioxygène sont donc récupérées avantageusement par la deuxième ligne d'alimentation 10 et plus précisément l'air y circulant. Dans le deuxième échangeur thermique 11b, le dioxygène voit sa température baissée par transfert de calories au profit de l'air circulant dans le deuxième échangeur thermique 11b. Le dioxygène refroidi sort du deuxième échangeur thermique 11b par la connexion fluidique 101 et pénètre, préférentiellement directement, dans le premier échangeur thermique 11a. Dans le premier échangeur thermique 11a, le dioxygène voit à nouveau sa température baissée par transfert de calories au profit de l'air circulant dans le premier échangeur thermique 11a. Le dioxygène refroidi sort du premier échangeur thermique 11a par la connexion fluidique 102 et est rejeté dans l'air.

Selon une possibilité, de l'air est fourni à l'électrolyseur 1. L'air arrive par la deuxième ligne d'alimentation 10 par la connexion fluidique 110 et pénètre, préférentiellement directement, dans le compresseur 19. L'air est comprimé par le compresseur 19 et sa température augmente. L'air sort du compresseur 19 par la connexion fluidique 111 et pénètre, préférentiellement directement, dans le deuxième module d'échange thermique 11, préférentiellement dans le premier échangeur thermique 11a. L'air est chauffé dans le premier échangeur thermique 11a par récupération des calories du dioxygène circulant dans le premier échangeur thermique 11a. L'air surchauffé sort du premier échangeur thermique 11a par la connexion fluidique 112 et pénètre, préférentiellement directement, dans le deuxième échangeur thermique 11b. L'air est à nouveau chauffé dans le deuxième échangeur thermique 11b par récupération des calories du dioxygène circulant dans le deuxième échangeur thermique 11b. L'air surchauffé sort du deuxième échangeur thermique 11b par la connexion fluidique 113 et pénètre, préférentiellement directement, dans le réchauffeur électrique 23 si besoin. Le réchauffeur électrique 23 assure la dernière montée en température éventuellement nécessaire pour que l'air atteigne une température cible prédéfinie pour entrer dans l'électrolyseur 1. L'air sort du réchauffeur électrique 23 par la connexion fluidique 114 et pénètre, préférentiellement directement, dans l'électrolyseur 1.

### Exemple

Une source de chaleur sous forme de vapeur à 150°C est utilisée pour alimenter la SOEC par la vapeur à 150°C, 2,3 bars et pour alimenter l'éjecteur 9 par la vapeur à 150°C 4 bars.

La SOEC fonctionne dans cet exemple impression quasi atmosphérique et hydrogène est stocké à une pression de 30 bars.

L'invention n'est pas limitée aux modes de réalisations précédemment décrits et s'étend à tous les modes de réalisation couverts par l'invention telle que définie dans les revendications ci-dessous.

### LISTE DES REFERENCES

- 1: Electrolyseur
- 2: Première ligne d'alimentation en vapeur d'eau
- 3: Deuxième ligne d'évacuation de dioxygène
- 4: Première ligne d'évacuation de dihydrogène
- 5a: Premier échangeur thermique du premier module d'échange thermique
- 5 b: Deuxième échangeur thermique du premier module d'échange thermique
- 6: Détendeur
- 7: Aéroréfrigérant
- 8: Séparateur liquide/Gaz
- 9: Ejecteur
- 10: Aéroréfrigérant
- 11a: Premier échangeur thermique du deuxième module d'échange thermique
- 11b: Deuxième échangeur thermique du deuxième module d'échange thermique
- 12: Séparateur liquide/Gaz
- 13: Compresseur
- 14: Aéroréfrigérant
- 15: Compresseur
- 16: Aéroréfrigérant
- 17: Séparateur liquide/Gaz
- 18: Deuxième ligne d'alimentation en air
- 19: Compresseur
- 20: arrivée vapeur source
- 21: Ligne de recyclage d'eau
- 22: arrivée vapeur recyclée dans le procédé (vapeur EHT)
- 23.: Réchauffeur électrique
- 24.: Réchauffeur électrique
- 25: Etage de traitement préliminaire
- 26.: Premier étage de traitement
- 27.: Deuxième étage de traitement
- A: Connexion fluidique entrant dans le détendeur 6
- B: Connexion fluidique entre le détendeur 6 et le premier échangeur thermique du premier module d'échange thermique 5a
- C: Connexion fluidique entre le premier échangeur thermique du premier module d'échange thermique 5a et le deuxième échangeur thermique du premier module d'échange thermique 5 b
- D: Connexion fluidique entre le deuxième échangeur thermique 5 b et le réchauffeur 14
- E: Connexion fluidique entre le réchauffeur 14 et l'électrolyseur 1
- F: Connexion fluidique entre l'électrolyseur 1 et le deuxième échangeur thermique 5 b
- G: Connexion fluidique entre le deuxième échangeur thermique 5 b et le premier échangeur thermique 5a
- H: Connexion fluidique entre le premier échangeur thermique 5a et le premier aéroréfrigérant 7
- I: Connexion fluidique entre le premier aéroréfrigérant 7 et le premier séparateur liquide/gaz 8
- J: Connexion fluidique entre le premier séparateur liquide/gaz 8 et l'éjecteur 9
- K: Connexion fluidique entre l'éjecteur 9 et aéroréfrigérant 10
- L: Connexion fluidique entre l'aéroréfrigérant 10 et le séparateur liquide/gaz 12
- M: Connexion fluidique entre le séparateur 12 et le compresseur 13
- N: Connexion fluidique entre le compresseur 13 et l'aéroréfrigérant 14
- O: Connexion fluidique entre l'aéroréfrigérant 14 et le compresseur 15
- P: Connexion fluidique entre le compresseur 15 et l'aéroréfrigérant16
- Q: Connexion fluidique entre l'aéroréfrigérant 16 et le séparateur 17
- R: Connexion fluidique sortant du séparateur 17
- 100: Connexion fluidique entre l'électrolyseur 1 et le deuxième échangeur thermique 11b
- 101: Connexion fluidique entre le deuxième échangeur thermique 11b et le premier échangeur thermique 11a
- 102: Connexion fluidique entre le premier échangeur thermique 11a l'extérieur
- 110: Connexion fluidique d'entrée de l'air dans le compresseur 19
- 111: Connexion fluidique entre le compresseur 19 et le premier échangeur thermique 11a
- 112: Connexion fluidique entre le premier échangeur thermique 11a et le deuxième échangeur thermique 11b
- 113: Connexion fluidique entre le deuxième échangeur thermique 11b et le réchauffeur 23
- 114: Connexion fluidique entre le réchauffeur 23 et l'électrolyseur 1

## Revendications

1. Système comprenant
• un électrolyseur (1) à haute température (EHT),
• une première ligne d'alimentation (2) de l'électrolyseur configurée pour alimenter l'électrolyseur (1) en vapeur d'eau,
• une première ligne d'évacuation (4) de l'électrolyseur configurée pour évacuer depuis l'électrolyseur (1) du dihydrogène,
• une deuxième ligne d'évacuation (3) de l'électrolyseur configurée pour évacuer depuis l'électrolyseur (1) du dioxygène,
• un premier module d'échange thermique (5) configuré pour assurer un échange thermique entre la première ligne d'alimentation (2) en vapeur d'eau et la première ligne d'évacuation (4) du dihydrogène,
**caractérisé en ce que** le système comprend un éjecteur (9) de vapeur agencé en aval du premier module d'échange thermique (5) sur la première ligne d'évacuation (4) du dihydrogène et configuré pour injecter de la vapeur d'eau dans la première ligne d'évacuation (4) du dihydrogène.

2. Système selon la revendication précédente comprenant au moins un compresseur (13, 15) agencé en aval de l'éjecteur (9).

3. Système selon la revendication précédente comprenant au moins deux compresseurs (13, 15) agencés en série et un échangeur thermique (14) agencé entre deux compresseurs (13, 15).

4. Système selon l'une quelconque des revendications précédentes comprenant au moins deux éjecteurs (9) agencés en série.

5. Système selon l'une quelconque des revendications précédentes comprenant un premier étage de traitement (26) du dihydrogène agencé sur la première ligne d'évacuation (4) du dihydrogène en aval de l'éjecteur (9).

6. Système selon la revendication précédente en combinaison de la revendication 2 ou 3 dans lequel le compresseur (13) est agencé en aval du premier étage de traitement (26).

7. Système selon l'une quelconque des deux revendications précédentes dans lequel le premier étage de traitement comprend un échangeur thermique (10) et/ou un séparateur (12) liquide/gaz.

8. Système selon l'une quelconque des revendications précédentes comprenant un étage de traitement préliminaire du dihydrogène agencé sur la première ligne d'évacuation (4) du dihydrogène en amont de l'éjecteur (9).

9. Système selon l'une quelconque des revendications précédentes en combinaison de la revendication 2 ou 3 comprenant un deuxième étage de traitement (27) du dihydrogène agencé sur la première ligne d'évacuation (4) du dihydrogène en aval du compresseur (13, 15).

10. Système selon l'une quelconque des revendications précédentes comprenant une deuxième ligne d'alimentation (10) de l'électrolyseur configuré pour alimenter l'électrolyseur (1) en air

11. Système selon la revendication précédente comprenant un deuxième module d'échange thermique (11) configuré pour assurer un échange thermique entre la deuxième ligne d'alimentation (10) en air et la deuxième ligne d'évacuation (3) du dioxygène.

12. Système selon l'une quelconque des revendications 7 à 9 comprenant une ligne de recyclage d'eau (21) connectée fluidiquement à au moins un parmi l'étage de traitement préliminaire, le premier étage de traitement et le deuxième étage de traitement.

13. Système selon l'une quelconque des revendications précédentes dans lequel la vapeur d'eau est de la vapeur d'eau fatale.

## Patentansprüche

1. System, umfassend
• einen Hochtemperaturelektrolyseur (1) (EHT),
• eine erste Leitung zur Versorgung (2) des Elektrolyseurs, die so konfiguriert ist, dass sie den Elektrolyseur (1) mit Wasserdampf versorgt,
• eine erste Leitung zur Evakuierung (4) des Elektrolyseurs, die so konfiguriert ist, dass sie Dihydrogen aus dem Elektrolyseur (1) evakuiert,
• eine zweite Leitung zur Evakuierung (3) des Elektrolyseurs, die so konfiguriert ist, dass sie Sauerstoff aus dem Elektrolyseur (1) evakuiert,
• ein erstes Wärmeaustauschmodul (5), das so konfiguriert ist, dass es einen Wärmeaustausch zwischen der ersten Leitung zur Versorgung (2) mit Wasserdampf und der ersten Leitung zur Evakuierung (4) von Dihydrogen gewährleistet,
**dadurch gekennzeichnet, dass** das System einen Dampfejektor (9) umfasst, der stromabwärts des ersten Wärmeaustauschmoduls (5) an der ersten Leitung zur Evakuierung (4) von Dihydrogen angeordnet und so konfiguriert ist, dass er Wasserdampf in die erste Leitung zur Evakuierung (4) von Dihydrogen einspritzt.

2. System nach dem vorhergehenden Anspruch, das mindestens einen Kompressor (13, 15) umfasst, der stromabwärts des Ejektors (9) angeordnet ist.

3. System nach dem vorhergehenden Anspruch, das mindestens zwei in Reihe angeordnete Kompressoren (13, 15) und einen zwischen zwei Kompressoren (13, 15) angeordneten Wärmetauscher (14) umfasst.

4. System nach einem der vorhergehenden Ansprüche, das mindestens zwei in Reihe angeordnete Ejektoren (9) umfasst.

5. System nach einem der vorhergehenden Ansprüche, umfassend eine erste Behandlungsstufe (26) für Dihydrogen, die an der ersten Leitung zur Evakuierung (4) von Dihydrogen stromabwärts des Ejektors (9) angeordnet ist.

6. System nach dem vorhergehenden Anspruch in Kombination mit Anspruch 2 oder 3, wobei der Kompressor (13) stromabwärts der ersten Behandlungsstufe (26) angeordnet ist.

7. System nach einem der beiden vorhergehenden Ansprüche, wobei die erste Behandlungsstufe einen Wärmetauscher (10) und/oder einen Flüssigkeits-/Gasabscheider (12) umfasst.

8. System nach einem der vorhergehenden Ansprüche, umfassend eine Vorbehandlungsstufe für Dihydrogen, die an der ersten Leitung zur Evakuierung (4) von Dihydrogen stromaufwärts des Ejektors (9) angeordnet ist.

9. System nach einem der vorhergehenden Ansprüche in Kombination mit Anspruch 2 oder 3, umfassend eine zweite Stufe zur Behandlung (27) von Dihydrogen, die an der ersten Leitung zur Evakuierung (4) von Dihydrogen stromabwärts des Kompressors (13, 15) angeordnet ist.

10. System nach einem der vorhergehenden Ansprüche, umfassend eine zweite Leitung zur Versorgung (10) des Elektrolyseurs, die so konfiguriert ist, dass sie den Elektrolyseur (1) mit Luft versorgt

11. System nach dem vorhergehenden Anspruch, umfassend ein zweites Wärmeaustauschmodul (11), das konfiguriert ist, um einen Wärmeaustausch zwischen der zweiten Leitung zur Versorgung (10) mit Luft und der zweiten Leitung zur Evakuierung (3) von Sauerstoff zu gewährleisten.

12. System nach einem der Ansprüche 7 bis 9, umfassend eine Wasserrückführungsleitung (21), die fluidisch mit mindestens einer von der Vorbehandlungsstufe, der ersten Behandlungsstufe und der zweiten Behandlungsstufe verbunden ist.

13. System nach einem der vorhergehenden Ansprüche, wobei der Wasserdampf ein Abfallwasserdampf ist.

## Claims

1. System comprising
• a high-temperature electrolyser (HTE) (1),
• a first electrolyser supply line (2) configured to supply the electrolyser (1) with steam,
• a first electrolyser discharge line (4) configured to discharge dihydrogen from the electrolyser (1),
• a second electrolyser discharge line (3) configured to discharge dioxygen from the electrolyser (1),
• a first heat exchange module (5) configured to provide a heat exchange between the first steam supply line (2) and the first dihydrogen discharge line (4),
**characterised in that** the system comprises a steam ejector (9) arranged downstream of the first heat exchange module (5) on the first dihydrogen discharge line (4) and configured to inject steam into the first dihydrogen discharge line (4).

2. System according to the preceding claim, comprising at least one compressor (13, 15) arranged downstream of the ejector (9).

3. System according to the preceding claim, comprising at least two compressors (13, 15) arranged in series and a heat exchanger (14) arranged between two compressors (13, 15) .

4. System according to any one of the preceding claims, comprising at least two ejectors (9) arranged in series.

5. System according to any one of the preceding claims, comprising a first stage (26) for treating dihydrogen arranged on the first dihydrogen discharge line (4) downstream of the ejector (9).

6. System according to the preceding claim in combination with claim 2 or 3, wherein the compressor (13) is arranged downstream of the first treatment stage (26).

7. System according to either one of the preceding two claims, wherein the first treatment stage comprises a heat exchanger (10) and/or a liquid/gas separator (12).

8. System according to any one of the preceding claims, comprising a stage for preliminary treatment of the dihydrogen arranged on the first dihydrogen discharge line (4) upstream of the ejector (9).

9. System according to any one of the preceding claims in combination with claim 2 or 3, comprising a second stage (27) for treating dihydrogen arranged on the first dihydrogen discharge line (4) downstream of the compressor (13, 15).

10. System according to any one of the preceding claims, comprising a second electrolyser supply line (10) configured to supply the electrolyser (1) with air.

11. System according to the preceding claim, comprising a second heat exchange module (11) configured to provide a heat exchange between the second air supply line (10) and the second dioxygen discharge line (3).

12. System according to any one of claims 7 to 9, comprising a water recycling line (21) fluidically connected to at least one from the preliminary treatment stage, the first treatment stage and the second treatment stage.

13. System according to any one of the preceding claims, wherein the steam is waste steam.
